# EUROPEAN PATENT APPLICATION

(11) **EP 1 130 380 A2**
(43) Date of publication of application: **05.09.2001**
(21) Application number: 01102124.3
(22) Date of filing: 31.01.2001
(51) Int. Cl.: G01N 21/21

(54) **Method of measuring reflection off multilayer dielectric coating**

(30) Priority: 22.02.2000 US 510202
(71) Applicant: TRW Inc., Redondo Beach, California 90278 (US)
(72) Inventor: Tan, Benjamin, Rosemead, CA 91770 (US); McKay, Andy G., Torrance, CA 90503 (US); Mandre, Taaro, Rancho Palos Verdes, CA 90275 (US)
(74) Representative: Schmidt, Steffen J., Dipl.-Ing.

(57) **Abstract**

A method of measuring the absorption of a lens covered with multilayers of dielectric materials comprises directing a beam of polarized light against the dielectric materials, polarizing the diffused beam of reflected light, and measuring the energy in the polarized diffused beam of reflected light, which is representative of the reflective and absorptive properties of the multilayers of the dielectric materials. The diffused beam is polarized at an angle that is complementary to the angle of the linearly polarized light that is directed against the dielectric materials. The complementary angle serves to null the diffused beam of reflected light.

## Description

### BACKGROUND OF THE INVENTION

### Field of the Invention

The present invention relates to a method of measuring reflected and absorbed energy, and more particularly to a method of measuring reflected and absorbed energy off an optic covered with multilayers of dielectric material.

### Description of the Prior Art

High energy lasers employ mirrors and lenses to form and direct the high energy laser beam. The amount of energy contained in the high energy impulse is so great that it would destroy the optical quality of the lens and potentially cause . catastrophic failure. Consequently, the lenses are coated with multiple layers of alternating dielectric materials to reflect the beam and prevent it from being absorbed by, and hence thermally distorting and destroying, the lenses. In one case, 32 paired-layers of dielectric material, each paired-layer being substantially one-half wavelength in thickness, are used to coat the lens. High energy laser are particularly sensitive to adverse impact of absorbed energy since the high power levels results in coating with low absorption levels.

In order to measure the reflectivity and absorption characteristics of a lens covered with multilayer dielectric materials laser absorption calorimetery has been used since the mid 1980s. This method comprises a high energy laser that generates light in the infrared and direct it towards an optic coated with multiple layers of alternating dielectric materials that is to be tested for its reflectivity. The optic is instrumented with temperature measurement devices to measure the amount of energy absorbed by the optic. Another device measures the amount of energy of the incident laser beam. By dividing the amount of energy absorbed by the optic with the amount of energy incident on the optic, the absorption of optic can be measured.

The equipment necessary to support the above test are complex and expensive. Since the absorption of the multilayered dielectric coated optic is very low, the energy of the incident laser must be very high to register a measurable temperature increase on the test optic. High power laser are expensive to maintain and operate. Also, for larger optic with their higher thermal mass, the amount of incident energy to necessary to register a temperature increase increases.

What is needed, therefore, is a method for measuring the reflection off a lens covered with multiple layers of alternating dielectric materials that is relatively simple and direct.

### SUMMARY OF THE INVENTION

The preceding and other shortcomings of the prior art are addressed and overcome by the present invention which provides generally a method of measuring the reflection off a lens covered with multiple layers of dielectric materials. The method comprises directing a beam of polarized light against the dielectric materials, polarizing the diffused beam of reflected light, and measuring the energy in the polarized diffused beam of reflected light. The energy is representative of the reflective properties of the multilayers of dielectric materials. The diffused beam is polarized at an angle that is complementary to the angle of the linearly polarized light that is directed against the dielectric materials. The complementary angle serves to minimize the amount of energy in, and null the diffused beam of reflected light.

The foregoing and additional features and advantages of this invention will become apparent from the detailed description and accompanying drawing figures below. In the figures and the written description, numerals indicate the various elements of the invention, like numerals referring to like elements throughout both the drawing figures and the written description.

### BRIEF DESCRIPTION OF THE DRAWINGS

FIG. 1 is a schematic diagram of the method for measuring the reflection off a lens covered with multilayers of dielectric materials in accordance with the present invention.

FIG. 2 is a graph of the distribution of energy at various polarization states in degrees.

FIG. 3 is a graph of null ratio versus energy absorption for several multilayer dielectric coatings.

### DETAILED DESCRIPTION OF THE PREFERRED EMBODIMENT

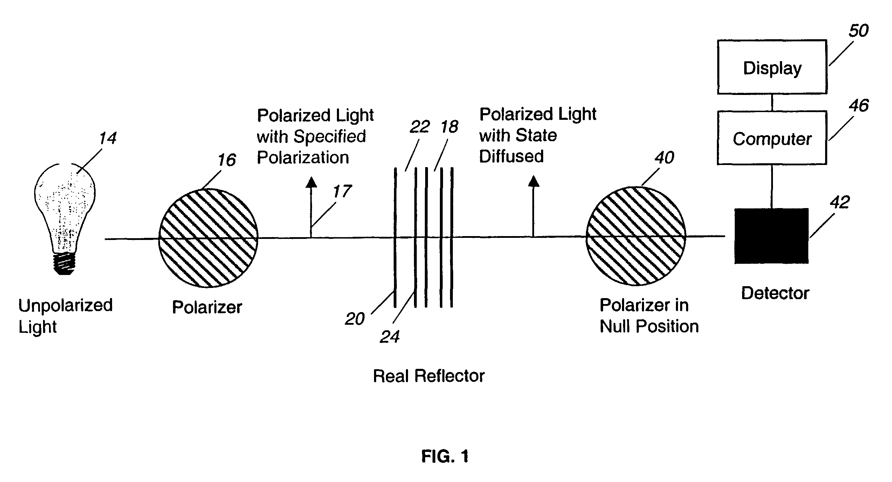

As illustrated in the schematic diagram of FIG. 1, the present invention provides a method for measuring the reflection off a lens coated with multilayers of dielectric materials, generally designated by the numeral 10. Briefly, the method 10 employs means for generating an optical signal 14. The means 14 is preferably a Nernst glower that generates light energy in the infrared. A polarizer 16 serves to linearly polarize the generated light shown by the arrow 17. The polarizer is preferably set to polarize the light at an angle of 125°, although any angle could be used. The polarized light is reflected off an optic 18. The optic 18 comprises a lens shown schematically by the numeral 20 coated, or covered, with an even number of dielectric layers 22 and 24 of alternating paired layers of dielectric materials that are substantially *λ*/2 in thickness. A typical dielectric stack will have reflectance in excess of 99.95% of incident energy. Thus, they protect the optic 18 from absorbing the light energy, which in the case of a high energy laser would thermally distort and eventually destroy the lens. For experimental purposes, the optic 18 is planar and has a diameter of 2.0 inches, although it can be conical with a diameter of 20 inches, or have a contoured geometry.

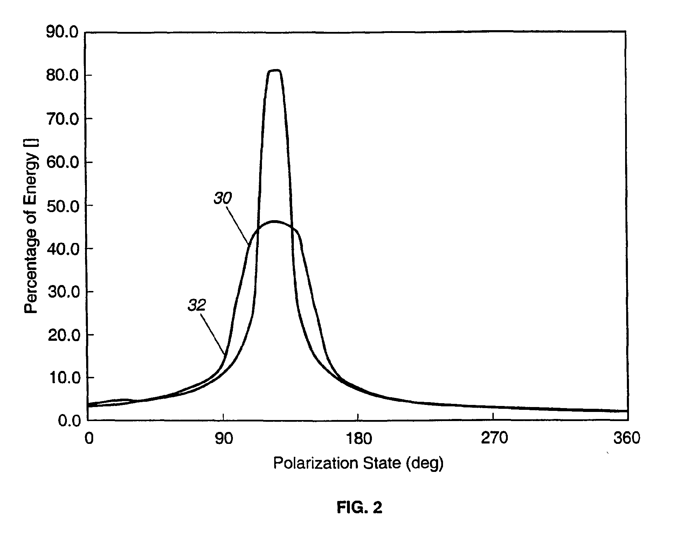

With reference to FIG. 2, a graph illustrates the distribution of energy at various angles of polarization. Note that graph 30 shows the polarization state of reflected light from an ideal reflector where each of the paired dielectric layers is λ/2. It should be recognized that the reflected light peaks at 125° with a waveform that generally resembles an impulse, much of the energy being within ±5° of the central 125° polarization angle. This represents a multilayer dielectric with very low absorption (VLA). Also shown is the graph 32 which represents the distribution of energy off the actual paired dielectric layers 22 and 24 which approximate, but are not exactly equal to, λ/2 in thickness. As shown, the distribution is diffused having a normalized amplitude of about 45% of the incident energy. In this case the distribution extends over ±35% of the central 125°. Again, the greater the shift, the greater the diffusion and the less reflective the multilayer dielectric.

Referring again to FIG. 1, the reflected light passes through a polarizer 40. The polarizer 40 is rotated to, and set at an angle that is complementary (approximately ± 90°) to the angle of the polarizer 16. In the preferred embodiment it is set to an angle of either 35° or 215°. This complementary relationship acts effectively causing the polarizer 40 to function as a band pass filter and serves to null the reflected light and minimize the total light energy detected by a detector 42. The detector 42 is preferably a sensitive IR detector. In the case of the ideal dielectric reflector shown in graph 30 a perfect null would be created and no energy would be detected by the detector 42. For the diffused energy distribution formed by the dielectric structure shown in graph 32, the diffused energy is widespread so significant portions of it extend beyond the band pass limits of the polarizer 40. Hence, this energy is detected by the detector 42. The amount of energy detected represents the depolarization due to the multilayer dielectric structure's non-ideal reflection of the incident energy. Accordingly, when large amounts of energy are detected, much of the incident energy is absorbed by the lens 20. Such a dielectric configuration should not be used as a coating for high energy lasers. It should be noted that the reflectance and absorption of low absorbing filters is a function of the null ratio and that the measurement of the null ratio provides a measurement of the absorption of the film.

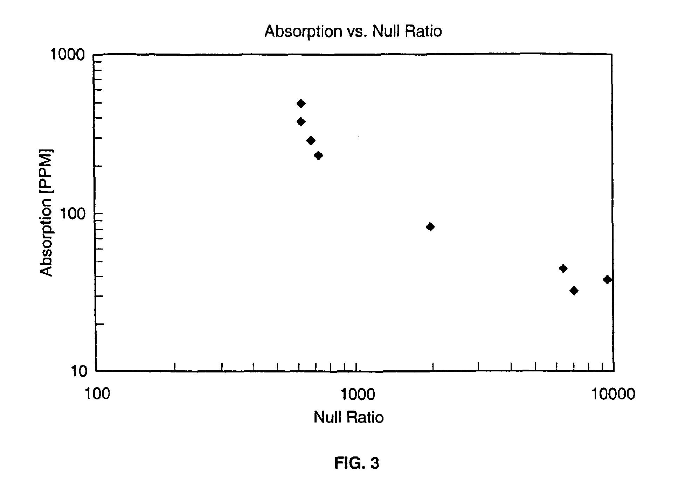

Referring now to FIG. 3, a graph is shown of null ratio versus energy absorption for eight dielectric coatings. The abscissa, null ratios (NR), varies logarithmically between 100 and 10,000. The NR is equal to the light energy transmitted divided by the detected energy when the polarizer 40 is in the null position. The absorption of the coatings is shown as the ordinate and it varies logarithmically between 0 and 500 parts per million. To determine whether the coating is acceptable, an absorption requirement is selected. Hence, for a requirement that the absorption be less than 200 parts per million, the coatings shown to the left of a vertical line passing through an absorption equal to 200 meet the requirement. The coatings to the right of the line are too absorptive and should not be used, as they would not protect the underlying lens. Coatings could be added to the chart as additional tests are made.

In an alternative embodiment a rotating filter wheel 44 with a carousel of filters can be utilized to distribute the nulled, polarized light into wavelength components.

A computer 46 or data processor serves to store the data collected by the detector 42 and also the absorption data shown in FIG. 3. The computer can be programmed to compare the detected energy to the absorption requirements and read or display the results on a display 50.

Accordingly, there has been provided a method of directly measuring reflectivity off a lens covered with multiple layers of alternating dielectric materials.

While there has been described what is at present considered to be the preferred embodiment of the invention, it will be understood that various modifications may be made therein, and it is intended to cover in the appended claims all such modifications as fall within the true spirit and scope of the invention.

## Claims

1. A method of measuring the reflection off a lens covered with multilayers of dielectric materials comprising:
directing a beam of polarized light against the dielectric materials; polarizing the diffused beam of reflected light; and
measuring the energy in the polarized diffused beam of reflected light, said energy being representative of the reflective properties of the multilayers of dielectric materials.

2. The method as set forth in claim 1 wherein the step of polarizing comprises polarizing the diffused beam at an angle that is complementary to the angle of the polarized light that is directed against the dielectric materials.

3. The method as set forth in claim 2 wherein said polarized light is linearly polarized.

4. The method as set forth in claim 1 wherein said light directed against the dielectric materials is polarized at a first angle, and said diffused beam of reflected light is polarized at a second angle that is complementary to said first angle.

5. The method as set forth in claim 4 wherein said second angle serves to minimize the amount of energy in the diffused beam.

6. The method as set forth in claim 4 wherein said second angle serves to null the diffused beam of reflected light.

7. The method as set forth in claim 4 and further comprising filtering the diffused beam of reflected light to provide a distribution of energy over a spectrum of wavelengths.

8. The method as set forth in claim 4 including comparing the measured energy against a data base having reflective properties of other multilayers of dielectric materials, and determining whether the measured reflection is satisfactory.

9. The method as set forth in claim 8 and further displaying the measured energy.

10. The method as set forth in claim 8 and further comprising storing the data base in a data processor.

11. The method as set forth in claim 1 wherein the paired multilayer dielectric materials have a thickness approximating λ/2 of the polarized light.
